# EUROPEAN PATENT APPLICATION

(11) **EP 4 614 837 A1**
(43) Date of publication of application: **10.09.2025**
(21) Application number: 24167553.7
(22) Date of filing: 28.03.2024
(51) Int. Cl.: H04B 7/185

(54) **COMMUNICATION DEVICE AND COMMUNICATION METHOD**

(30) Priority: 05.03.2024 TW 113107926
(71) Applicant: Industrial Technology Research Institute, 310401 Hsinchu (TW)
(72) Inventor: LIEN, Shao-Yu, 704 Tainan (TW); HU, Heng-Ming, 320 Taoyuan (TW); TSENG, Tzu-Yu, 420 Taichung (TW); SHEU, Chorng-Ren, 807 Kaohsiung (TW)
(74) Representative: dompatent von Kreisler Selting Werner - Partnerschaft von Patent- und Rechtsanwälten mbB

(57) **Abstract**

The present application discloses a communication device and a communication method. The communication method includes: determining whether there exists a current need to decide at least one target beam to determine whether to receive a satellite payload communication signal from a satellite payload by the at least one target beam; and determining whether a current satellite trajectory information is expired to decide whether to generate a current satellite trajectory information estimate. The user terminal controls its antenna to communicate with the satellite payload.

## Description

### TECHNICAL FIELD

The disclosure relates in general to a communication device and a communication method, and more particularly to a communication device and a communication method capable of implementing the acquisition and tracking of beams enhancement in the regard of low earth orbit satellite communication.

### BACKGROUND

When satellite payload transmits a satellite message to a user terminal (UT), sometimes the user terminal cannot smoothly interpret the satellite message due to environmental factors. Under such circumstance, lacking the position information of the satellite payload, the user terminal must scan beams. In order to support the scanning of a large number of beams, the workload of the baseband module and/or the radio frequency module of the user terminal will increase.

Under satellite communication, in order to provide communication service to a larger area, the satellite payload needs cover this area with a large number of beams. In the absence of global positioning system (GPS) information or two-line element set (TLE) information, the user terminal normally needs to scan each beam, which is referred as full search. Even when GPS information or TLE information is available, rain or thunder may decrease the accuracy and affect system efficiency.

Take the current internal standard, such as the 3rd Generation Partnership Project (3GPP) standard, for instance. Based on trajectory information (such as GPS), the satellite payload and the user terminal can be synchronized and calibrated in terms of time, frequency, and position.

Therefore, it has become a prominent task to resolve the issue that the confidence in beam acquisition is too low when the user terminal cannot smoothly interpret the satellite information transmitted from the satellite payload due to environmental factors.

### SUMMARY

According to one embodiment, a communication method used in a user terminal is provided. The communication method includes the following steps: determining whether there exists a current need to decide at least one target beam to determine whether to receive a satellite payload communication signal from a satellite payload by the at least one target beam; and determining whether a current satellite trajectory information is expired to decide whether to generate a current satellite trajectory information estimate. The user terminal controls its antenna to communicate with the satellite payload.

According to another embodiment, a communication device is provided. The communication device includes: an antenna; a radio frequency module coupled to the antenna to control the antenna; and a baseband module coupled to the radio frequency module. The baseband module is configured to: determine whether there exists a current need to decide at least one target beam to determine whether to receive a satellite payload communication signal from a satellite payload by the at least one target beam; and determine whether a current satellite trajectory information is expired to decide whether to generate a current satellite trajectory information estimate, wherein the baseband module emits a control signal to the radio frequency module for enabling the radio frequency module to control the antenna to communicate with the satellite payload.

The above and other aspects of the invention will become better understood with regard to the following detailed description of the preferred but non-limiting embodiment(s). The following description is made with reference to the accompanying drawings.

### BRIEF DESCRIPTION OF THE DRAWINGS

FIG. 1A is a schematic diagram of a user terminal 100 smoothly interpreting the satellite message transmitted from a satellite payload 120.
FIG. 1B is a schematic diagram of the user terminal 100 failing to smoothly interpret a part of satellite message transmitted from the satellite payload 120 due to environmental factors.
FIG. 2 is a functional block diagram of a user terminal according to an embodiment of the present application.
FIG. 3 is a flowchart of a communication method according to an embodiment of the present application.
FIG. 4 is a flowchart of a communication method according to another embodiment of the present application.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

### DETAILED DESCRIPTION

Technical terms are used in the specification with reference to the prior art used in the technology field. For any terms described or defined in the specification, the descriptions and definitions in the specification shall prevail. Each embodiment of the present disclosure has one or more technical features. Given that each embodiment is implementable, a person ordinarily skilled in the art can selectively implement or combine some or all of the technical features of any embodiment of the present disclosure.

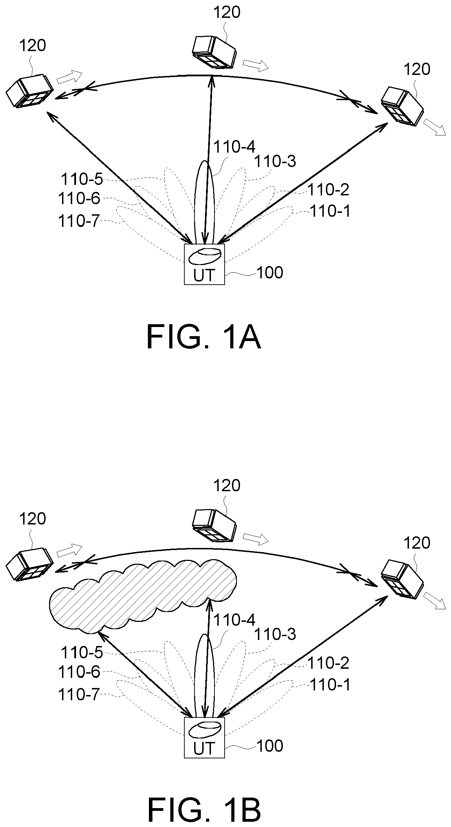

FIG. 1A is a schematic diagram of a user terminal 100 smoothly interpreting the satellite message transmitted from a satellite payload 120. The user terminal 100 has a plurality of beams 110_1~110_7, which are for exemplary purpose, not for limiting the present application. In FIG. 1A, the user terminal 100 switches corresponding beams 110_1~110_7 along with the change in the position of the satellite payload 120 to communicate with the satellite payload 120. For instance, the user terminal 100 uses the beam 110_4 to communicate with the satellite payload 120.

When the user terminal 100 is able to smoothly interpret the satellite message transmitted from the satellite payload 120, the number of possible beams searched by the user terminal 100 can be reduced, and the workload of the baseband module and/or radio frequency module of the user terminal 100 can also be reduced, so that there is no need to support more beams and the required time for the user terminal 100 to search for the beams that can be linked to the satellite can also be reduced.

FIG. 1B is a schematic diagram of the user terminal 100 failing to smoothly interpret a part of satellite message transmitted from the satellite payload 120 due to environmental factors. In FIG. 1B, the interpretation performance of the user terminal 100 is affected by environmental factors such as overcasting clouds. Therefore, if the accuracy of beam search by the user terminal 100 is increased, the communication robustness between the user terminal 100 and the satellite payload 120 can be enhanced, the number of possible beams searched by the user terminal 100 can be reduced, so that the workload of the baseband module and/or radio frequency module of the user terminal 100 can be reduced, and more beams can be supported.

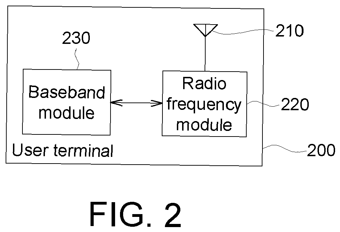

FIG. 2 is a functional block diagram of a user terminal according to an embodiment of the present application. As indicated in FIG. 2, the user terminal 200 according to an embodiment of the present application includes: an antenna 210, a radio frequency module 220 and a baseband module 230. The antenna 210 is coupled to the radio frequency module 220; the radio frequency module 220 is coupled to the baseband module 230. The baseband module 230 can implement the communication method according to an embodiment of the present application to determine whether the satellite trajectory information is expired. If it is determined that the satellite trajectory information is expired, then the current satellite trajectory information can be predicted based on historical satellite trajectory information to enhance the mechanism design in the acquisition and tracking of beams. Thus, the confidence in beam acquisition, beam tracking and signal transmission can be enhanced.

According to the communication method implemented by the baseband module 230 (for instance, beam decision), the baseband module 230 emits a control signal to the radio frequency module 220 for enabling the radio frequency module 220 to select the beams of the antenna 210. Thus, the user terminal 200 can control the antenna 210 to communicate with the satellite.

In an embodiment of the present application, the baseband module 230 and the radio frequency module 220 can be realized by hardware, software, firmware and/or a combination thereof, and the said arrangement is still within the spirit of the present application.

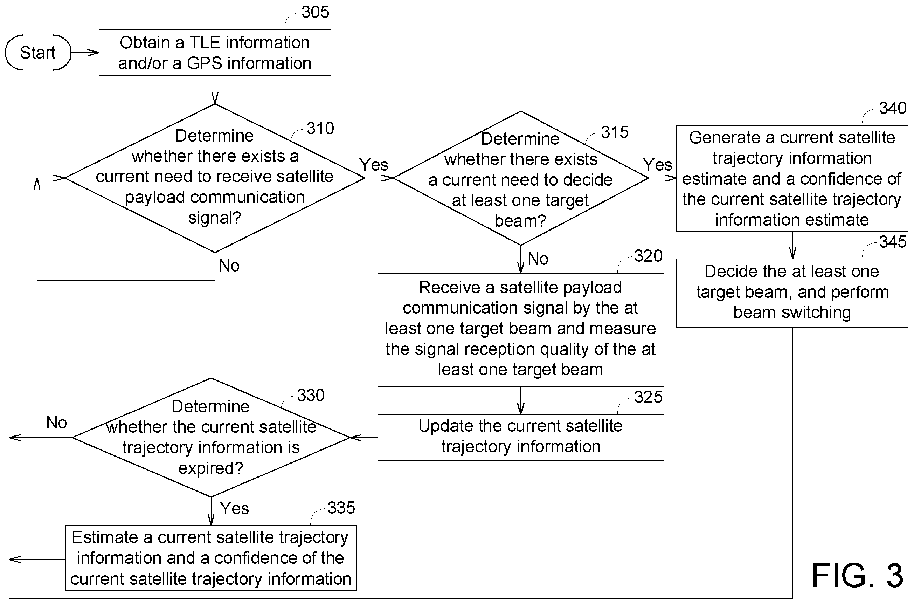

FIG. 3 is a flowchart of a communication method according to an embodiment of the present application. The communication method according to an embodiment of the present application is implemented by the baseband module 230 of the user terminal 200.

In step 305, at least one of a two-line element set (TLE) information and a GPS information is obtained by the user terminal 200, wherein the user terminal 200 can obtain the TLE information from a satellite payload through a downlink (DL) signal or a terrestrial network or obtain the GPS information from the satellite payload through a downlink signal.

In step 310, whether there exists a current need to receive satellite payload communication signal is determined by the user terminal 200. Exemplarily but not restrictively, the user terminal 200 determines whether the low earth orbit (LEO) is close to the location of the user terminal 200 according to the TLE information or the signal reception intensity so as to determine whether the time for receiving the satellite payload communication signal is due (such as schedule at to specific time or a specified time interval). For instance, the satellite payload flies over Taiwan 4 times per day; each time, the satellite payload allows the user terminal to receive communication payload signals for 2-4 minutes.

If the determination in step 310 is affirmative, the method proceeds to step 315; if the determination in step 310 is negative, the method waits for the next determination to come. In an embodiment, if the user terminal 200 is in a waiting state, the user terminal 200 can enter a sleep mode to reduce power consumption.

In step 315, whether there exists a current need (such as scheduled at another specific time or another specified time interval) is determined by the user terminal 200 so as to decide at least one target beam. As disclosed above, the user terminal needs to receive the satellite payload communication signal for a period of 2-4 minutes. However, within this period, the user terminal does not necessarily have to receive beams and perform beam switch in a continuous manner. In an embodiment, the user terminal can determine within a specified period whether the time for deciding at least one target beam is up. Exemplarily but not restrictively, if the beam resolution is 2 degree and the altitude is 600 km, then the time interval for deciding at least one target beam and determining whether to perform beam switch is set to 100ms (specified period).

If the determination in step 315 is negative, the method proceeds to step 320; if the determination in step 315 is affirmative, the method proceeds to step 340.

In step 320, if the user terminal 200 determines that there does not exist a current need to decide at least one target beam, a satellite payload communication signal is received by the at least one target beam and the signal reception quality of the at least one target beam is measured. In an embodiment, the at least one target beam is the target beam decided at the previous time for deciding at least one target beam.

In step 325, the current satellite trajectory information is updated. For instance, the current satellite trajectory information that needs to be updated is interpreted and updated.

In step 330, whether the current satellite trajectory information is expired is determined. Exemplarily but not restrictively, whether the current satellite trajectory information is expired is determined according to the following conditions: (1) a signal-to-noise ratio (SNR) of the current satellite trajectory information is less than a SNR threshold; or, (2) the user terminal 200 cannot or can hardly interpret the satellite trajectory information transmitted from the satellite; or, (3) the user terminal 200 can smoothly interpret the satellite trajectory information transmitted from the satellite, and the difference between the interpreted current satellite trajectory information and the historical satellite trajectory information previously obtained is greater than a threshold (exemplarily but not restrictively, the difference between the recent time at which the satellite trajectory information is obtained and the current time exceeds a time threshold). In an embodiment, when any of the above conditions holds true, the current satellite trajectory information is regarded as having been expired.

If the determination in step 330 is affirmative, the method proceeds to step 335. In step 335, a current satellite trajectory information and a confidence of the current satellite trajectory information are estimated. If the determination in step 330 is negative, then the method returns to step 310 in which whether the time for receiving the satellite payload communication signal is due is determined.

If the user terminal 200 determines that there exists a current need to decide the at least one target beam, the method proceeds to step 340, in which a current satellite trajectory information estimate and a confidence of the current satellite trajectory information estimate are generated by the user terminal 200. For instance, in step 340, a current satellite trajectory information estimate and a confidence of the current satellite trajectory information estimate (such as variance and confidence interval) are generated by the user terminal 200 according to the current and historical GPS information and/or TLE information; and, the current satellite trajectory information estimate is added to a satellite trajectory information database by the user terminal 200. In step 340, the current satellite trajectory information estimate is generated by the user terminal 200 according to the satellite trajectory information of the satellite trajectory information database. For instance, the user terminal 200 generates the current satellite trajectory information estimate and the confidence of the current satellite trajectory information estimate according to a plurality of historical satellite trajectory information estimates, a plurality of confidence of the historical satellite trajectory information estimates, a plurality of historical satellite trajectory information (obtained by the user terminal 200 by way of interpretation, not estimation) and a plurality of confidence of the historical satellite trajectory information. Exemplarily but not restrictively, in an embodiment of the present application, the current satellite trajectory information estimate and the confidence of the current satellite trajectory information estimate can be obtained according to the GPS information and/or TLE information using a linear prediction technique (such as Kalman filter), a non-linear prediction technique (such as extended Kalman filter or unscented Kalman filter), a machine learning technique (such as neural network or deep learning), or a combination thereof.

In step 345, the at least one target beam is decided by the user terminal 200, and a beam switch mechanism is performed. Then, the method returns to step 310.

In step 345, the beam switch mechanism can be realized as follows: the baseband module 230 of the user terminal 200 informs the radio frequency module 220 of the decided one (or more) target beam, so that the radio frequency module 220 switches antenna beams to the decided one (or more) target beam.

Step 345 includes but is not limited to the following details. Exemplarily but not restrictively, the at least one target beam is decided, and the beam switch mechanism is performed by the user terminal 200 according to its current satellite trajectory information and GPS information. The user terminal 200 calculates a beam based on the earth coordinate system (elevation angle and azimuth angle), wherein, the satellite trajectory information and the GPS information of the user terminal 200 are based on an earth coordinate system, such as an earth earth-centered inertial (ECI) coordinate system or an earth-centered, earth-fixed (ECEF) coordinate system. Through an axis transformation matrix, the user terminal 200 calculates one or more candidate beams based on an antenna coordinate system (elevation angle and azimuth angle). Since the calculation is based on the antenna system coordinate axes of the user terminal 200, the user terminal 200 performs a coordinate system conversion to convert the one or more candidate beams based on the earth coordinate system (elevation angle and azimuth angle) to the one or more candidate beams (elevation angle and azimuth angle) based on the antenna system coordinate axes of the user terminal 200.

In step 345, one or more candidate beams based on the antenna system coordinate axes of the user terminal 200 are selected by the user terminal 200 according to its satellite trajectory information and GPS information (in an embodiment, the number of the one or more candidate beams is less than or far less than the number of all beams) and a signal intensity or SNR of the one or more candidate beams is measured, so as to select the at least one target beam among the one or more candidate beams, wherein, the at least one target beam has a maximum signal intensity or a maximum SNR.

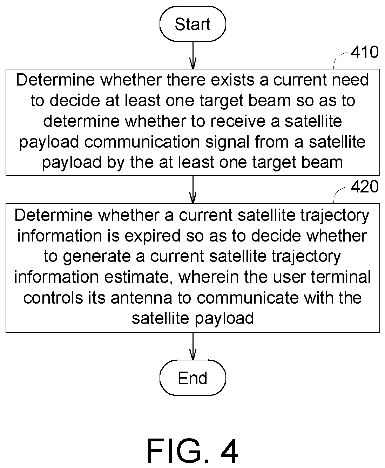

FIG. 4 is a flowchart of a communication method according to another embodiment of the present application. The communication method according to an embodiment of the present application is implemented by the baseband module 230 of the user terminal 200. The communication method includes the following steps: In step 410, whether there exists a current need to decide at least one target beam is determined so as to determine whether to receive a satellite payload communication signal from a satellite payload by the at least one target beam. In step 420, whether a current satellite trajectory information is expired is determined so as to decide whether to generate a current satellite trajectory information estimate, wherein the user terminal controls its antenna to communicate with the satellite payload.

In an embodiment of the present application, the environmental factors which make the user terminal unable to smoothly interpret the satellite GPS message transmitted from the satellite payload are also simulated, that is, whether the error of the message received by the user terminal swells is simulated. By using the communication method according to an embodiment of the present application, the predicted information are close to the real position information of the satellite, the inaccuracy of estimation diminishes along with time and eventually converges, and the slope of the satellite trajectory information gradually approaches real trajectory slope.

The situational assumptions are as follows. During verification, the probability of the satellite trajectory information being outdates is set to be random. For instance, the randomly generated probabilities are set to 1%, 2% and 5%. If the time points at which the trajectory information error ε swells are odd-numbered, then ε=600; and, if the time point at which ε swells are even-numbered, then ε=-600.

If the satellite trajectory information is not expired, then the distribution of the satellite trajectory information error is ε∼N (0, 0.001).

The simulation results show that the current satellite trajectory information estimate can quickly converge and the simulated uncertainty parameter can quickly converge and approximate 0, this indicates that the simulated prediction of the satellite trajectory information has a high confidence.

A comparison of simulation results is listed in Table 1:

**Table 1**

| | Error rate 1 % | Error rate 2% | Error rate 5% |
|---|---|---|---|
| Embodiment of the present application: | 0.18/2.08 | 0.30/2.50 | 0.74/3.96 |

| Estimated mean error/Root mean square (RMS) error (km) | | | |
|---|---|---|---|
| Other Method 1: | 9.4/13.8 | 13.2/18.4 | 19.9/27.6 |
| Estimated Mean Error/RMS Error (Km) | | | |
| Other Method 2: | 14.0/15.6 | 14.8/17.0 | 14.3/18.0 |
| Estimated Mean Error/RMS Error (Km) | | | |
| Other Method 3: | 42.3/43.2 | 42.6/43.5 | 38.7/40.4 |
| Estimated Mean Error/RMS Error (Km) | | | |

Table 1 shows that the prediction of the current satellite trajectory information estimate obtained using the communication method according to an embodiment of the present application has a small error and does not change much among different error rates. The window sizes used in other method 1 to other method 3 respectively are 20, 60 and 180. Viewing from the results obtained using other method 1 to other method 3, prediction error of the current satellite trajectory information estimate is greatly affected by window size and error rate.

In an embodiment of the present application, the user terminal can monitor the triggering conditions at two time points: the time for receiving the satellite payload communication signal and the time for deciding beams. The time for receiving signal can be obtained from the content of the TLE information by way of inference. The TLE information can be obtained from satellite communication payload or a terrestrial network. The time for deciding beams is a specified period, and there is no need to continuously decide beams at each time point.

When the user terminal determines that the time for receiving the satellite payload communication signal is due, the user terminal can receive the satellite payload communication signal by the one or more target beams which are previously selected; the user terminal can receive the satellite payload communication signal by the selected one or more target beams and measure the signal reception quality of one or more target beams (including signal intensity and/or signal power to noise power ratio); the user terminal can receive the satellite trajectory information transmitted from the satellite by the one or more target beams which are previously selected (including time, position, movement speed and/or movement direction) and update the satellite trajectory information. The user terminal can determine whether the satellite trajectory information which are currently known are expired according to the following conditions: (1) a SNR of the current satellite trajectory information estimate of the user terminal is less than an SNR threshold; or, (2) the user terminal cannot or can hardly interpret the satellite trajectory information transmitted from the satellite; and/or, (3) the user terminal can smoothly interpret the satellite trajectory information transmitted from the satellite, but the difference between the interpreted current satellite trajectory information and the historical satellite trajectory information previously obtained is greater than a threshold.

If the user terminal determines that the current satellite trajectory information is expired, the user terminal can generate a current satellite trajectory information estimate and a confidence of the current satellite trajectory information estimate (such as variance and/or confidence interval) according to the current and historical GPS information and TLE information. For instance, the user terminal can predict the current satellite trajectory information according to the current satellite trajectory information estimate and the confidence of the current satellite trajectory information estimate using a linear prediction technique (such as Kalman filter), a non-linear prediction technique (such as extended Kalman filter or unscented Kalman filter), a machine learning technique (such as neural network or deep learning), or a combination thereof and add the current satellite trajectory information estimate to the satellite trajectory information database.

When the user terminal determines that the time for deciding beams is due, the user terminal can generate the current satellite trajectory information estimate and the confidence of the current satellite trajectory information estimate according to a plurality of historical satellite trajectory information estimates, a plurality of confidence of the historical satellite trajectory information estimates, a plurality of previously interpreted satellite trajectory information and a plurality of confidence of the previously interpreted satellite trajectory information.

Based on the current satellite trajectory information and the confidence of the current satellite trajectory information, the user terminal can perform beam switch. The user terminal can firstly calculate the beams based on an earth coordinate system (elevation angle and azimuth angle) then calculate the beams based on an antenna coordinate system (elevation angle and azimuth angle) through an axis transformation matrix. Based on the satellite trajectory information and the GPS information, the user terminal can select one (or more than one but far less than the number of all beams) candidate beam and measure the signal intensity or SNR of the selected candidate beam, so as to switch to the one or more beams whose signal intensity or SNR is the largest and use them as one or more target beams.

The embodiment of the present invention relates to a communication device and a communication method. When the user terminal cannot smoothly interpret the satellite message transmitted from the satellite payload (for instance, due to environmental factors), a suitable beam can be located to communicate with the satellite. Thus, the problem of beam tracking being inaccurate which arises when the satellite trajectory information are inaccurately or hardly received due to the poor communication environment can be resolved. The present application embodiment can effectively increase the accuracy of beam searching and reduce the number of possible beams searched by the user terminal and the required search time.

According to the communication device (such as a user terminal) and the communication method disclosed in an embodiment of the present application, based on the determination regarding whether the current satellite trajectory information is expired, if it is determined that the current satellite trajectory information is expired, then a current satellite trajectory information estimate is generated based on historical satellite trajectory information, and the acquisition and tracking of beams are enhanced.

The communication device (such as a user terminal) and the communication method according to an embodiment of the present application can resolve the problem of insufficient confidence in beam acquisition which arises when the user terminal cannot smoothly interpret the satellite information transmitted from the satellite payload. Thus, the communication device (such as a user terminal) and the communication method according to an embodiment of the present application can enhance the acquisition and tracking of beams and increase the confidence in signal transmission.

Although many specific details are described in the present application, these specific details should not be interpreted as restrictions of the scope of protection of the claims; rather, they should be regarded as descriptions of the features of specific implementations. In the application, a sub-combination of some features described in the context of a single embodiment can be implemented in one single embodiment. Conversely, various features described in the context of one single embodiment can be implemented in one or a suitable sub-combination of several embodiments. Initially, the descriptions may suggest that some features would function only when they are added to some combinations, and such combinations may even be specified. However, under some circumstances, one or some features can be deleted from the said combinations, which are related to one specific sub-combination or variations thereof. Similarly, although the operations of the method are illustrated in a specific order, it does not mean that these operations must be executed according to the illustrated order or that all illustrated operations must be executed in order to achieve desired results.

Although only some examples and implementations are disclosed in the above embodiments of the application, based on the disclosed contents, modifications, adjustments, and improvements. While the invention has been described by way of example and in terms of the preferred embodiment (s), it is to be understood that the invention is not limited thereto. Based on the technical features embodiments of the present invention, a person ordinarily skilled in the art will be able to make various modifications and similar arrangements and procedures without breaching the spirit and scope of protection of the invention. Therefore, the scope of protection of the present invention should be accorded with what is defined in the appended claims.

## Claims

1. A communication method used in a user terminal (200), the communication method comprising:
determining whether there exists a current need to decide at least one target beam to determine whether to receive a satellite payload communication signal from a satellite payload by the at least one target beam; and
determining whether a current satellite trajectory information is expired to decide whether to generate a current satellite trajectory information estimate,
wherein, the user terminal controls an antenna of the user terminal to communicate with the satellite payload.

2. The communication method according to claim 1, further comprising: when the current satellite trajectory information is expired , generating a current satellite trajectory information estimate and a confidence of the current satellite trajectory information estimate.

3. The communication method according to claim 1, wherein
when there does not exist a current need to decide the at least one target beam, receiving the satellite payload communication signal by the at least one target beam and measuring a signal reception quality of the at least one target beam;
updating the current satellite trajectory information;
wherein determining whether the current satellite trajectory information is expired comprises:
determining whether a signal-to-noise ratio of the current satellite trajectory information is less than a signal-to-noise ratio threshold; or
determining that the current satellite trajectory information cannot be smoothly interpreted; or
in case that the current satellite trajectory information is smoothly interpreted by the user terminal, a difference between the current satellite trajectory information and a historical satellite trajectory information previously obtained is greater than a threshold.

4. The communication method according to claim 1, further comprising:
obtaining at least one of a two-line element set (TLE) information and a global positioning system (GPS) information by the user terminal,
wherein,
the user terminal obtains the at least one of the TLE information and the GPS information from the satellite payload through a downlink signal or a terrestrial network.

5. The communication method according to claim 1, further comprising:
determining whether there exists a current need to receive the satellite payload communication signal according to a two-line element set (TLE) information or a signal reception intensity; and
determining whether there exists a current need to decide the at least one target beam within a specified period.

6. The communication method according to claim 1, wherein,
when there exists a current need to decide the at least one target beam, a current satellite trajectory information estimate and a confidence of the current satellite trajectory information estimate are generated,
the at least one target beam is decided according to the current satellite trajectory information and a global positioning system (GPS) information of the user terminal, and beam switch is performed;
one or more first candidate beams based on an earth coordinate system is calculated, and the one or more first candidate beams based on the earth coordinate system are converted to one or more second candidate beams based on an antenna coordinate system through axis transformation,
individual signal intensity or signal-to-noise ratio of the one or more second candidate beams based on the antenna coordinate system is measured, so as to select the at least one target beam among the one or more second candidate beams based on the antenna coordinate system, wherein, the at least one target beam has a maximum signal intensity or a maximum signal-to-noise ratio.

7. The communication method according to claim 1, wherein,
when there exists a current need to decide the at least one target beam, a current satellite trajectory information estimate and a confidence of the current satellite trajectory information estimate are generated;
the at least one target beam is decided, and beam switch is performed;
in generating the confidence of the current satellite trajectory information estimate and the current satellite trajectory information estimate, the confidence of the current satellite trajectory information estimate and the current satellite trajectory information estimate are generated according to a plurality of historical satellite trajectory information estimates, a plurality of confidence of the historical satellite trajectory information estimates, a plurality of historical satellite trajectory information and a plurality of confidence of the historical satellite trajectory information, and, the current satellite trajectory information estimate is added to a satellite trajectory information database.

8. A communication device (200), comprising:
an antenna (210);
a radio frequency module (220) coupled to the antenna to control the antenna; and
a baseband module (230) coupled to the radio frequency module,
wherein, the baseband module is configured to:
determine whether there exists a current need to decide at least one target beam to determine whether to receive a satellite payload communication signal from a satellite payload by the at least one target beam; and
determine whether a current satellite trajectory information is expired to decide whether to generate a current satellite trajectory information estimate,
wherein, the baseband module emits a control signal to the radio frequency module and the radio frequency module controls the antenna to communicate with the satellite payload.

9. The communication device according to claim 8, wherein, the baseband module is further configured to: when the current satellite trajectory information is expired, generate the current satellite trajectory information estimate and a confidence of the current satellite trajectory information estimate.

10. The communication device according to claim 8, wherein
the baseband module is further configured to, when there does not exist a current need to decide the at least one target beam, receive the satellite payload communication signal by the at least one target beam and measure a signal reception quality of the at least one target beam;
update the current satellite trajectory information;
wherein, when determining that the current satellite trajectory information is expired, the baseband module is further configured to:
determine whether a signal-to-noise ratio of the current satellite trajectory information is less than a signal-to-noise ratio threshold; or
determine that the current satellite trajectory information cannot be smoothly interpreted; or
in case that the user terminal smoothly interprets the current satellite trajectory information, a difference between the current satellite trajectory information and a historical satellite trajectory information previously obtained is greater than a threshold.

11. The communication device according to claim 8, wherein, the baseband module is further configured to:
obtain at least one of a two-line element set (TLE) information and a global positioning system (GPS) information,
wherein,
the at least one of the TLE information and the GPS information is obtained from the satellite payload through a downlink signal or a terrestrial network.

12. The communication device according to claim 8, wherein, the baseband module is further configured to:
determine whether there exists a current need to receive the satellite payload communication signal according to a two-line element set (TLE) information or a signal reception intensity; and
determine, within a specified period, whether there exists a current need to decide the at least one target beam.

13. The communication device according to claim 8, wherein, the baseband module is further configured to:
when there exists a current need to decide the at least one target beam, generate a current satellite trajectory information estimate and a confidence of the current satellite trajectory information estimate,
decide the at least one target beam according to the current satellite trajectory information and a global positioning system (GPS) information of the user terminal and perform beam switch;
calculate one or more first candidate beams based on an earth coordinate system, and convert the one or more first candidate beams based on the earth coordinate system to one or more second candidate beams based on an antenna coordinate system through axis transformation,
measure individual signal intensity or signal-to-noise ratio of the one or more second candidate beams based on the antenna coordinate system, so as to select the at least one target beam among the one or more candidate beams based on the antenna coordinate system, wherein, the at least one target beam has a maximum signal intensity or a maximum signal-to-noise ratio.

14. The communication device according to claim 8, wherein, the baseband module is further configured to:
when there exists a current need to decide the at least one target beam, a current satellite trajectory information estimate and a confidence of the current satellite trajectory information estimate are generated;
the at least one target beam is decided, and beam switch is performed;
in generating the confidence of the current satellite trajectory information estimate and the current satellite trajectory information estimate, the confidence of the current satellite trajectory information estimate and the current satellite trajectory information estimate are generated according to a plurality of historical satellite trajectory information estimates, a plurality of confidence of the historical satellite trajectory information estimates, a plurality of historical satellite trajectory information and a plurality of confidence of the historical satellite trajectory information and add the current satellite trajectory information estimate to a satellite trajectory information database.

## Amended claims

### Amended claims in accordance with Rule 137(2) EPC.

1. A communication method used in a user terminal (100, 200), **characterized in that**:
based on another specific time or another specified time interval, determining whether to decide at least one target beam (110_1~110_7) to receive a satellite payload communication signal from a satellite payload by the at least one target beam; and
in response that determining a current satellite trajectory information is expired, decide to generate a current satellite trajectory information estimate,
wherein, the user terminal controls an antenna (210) of the user terminal to communicate with the satellite payload.

2. The communication method according to claim 1, further comprising: when the current satellite trajectory information is expired, generating a current satellite trajectory information estimate and a confidence of the current satellite trajectory information estimate.

3. The communication method according to claim 1, wherein
when determining not to decide the at least one target beam, receiving the satellite payload communication signal by the at least one target beam and measuring a signal reception quality of the at least one target beam;
updating the current satellite trajectory information;
wherein in determining whether the current satellite trajectory information is expired,
determining whether a signal-to-noise ratio of the current satellite trajectory information is less than a signal-to-noise ratio threshold; or
determining that the current satellite trajectory information cannot be smoothly interpreted; or
in case that the current satellite trajectory information is smoothly interpreted by the user terminal, a difference between the current satellite trajectory information and a historical satellite trajectory information previously obtained is greater than a threshold.

4. The communication method according to claim 1, further comprising:
obtaining at least one of a two-line element set (TLE) information and a global positioning system (GPS) information by the user terminal,
wherein,
the user terminal obtains the at least one of the TLE information and the GPS information from the satellite payload through a downlink signal or a terrestrial network.

5. The communication method according to claim 1, further comprising:
determining to receive the satellite payload communication signal according to a two-line element set (TLE) information or a signal reception intensity; and
determining to decide the at least one target beam within a specified period.

6. The communication method according to claim 1, wherein,
when determining to decide the at least one target beam, a current satellite trajectory information estimate and a confidence of the current satellite trajectory information estimate are generated,
the at least one target beam is decided according to the current satellite trajectory information and a global positioning system (GPS) information of the user terminal, and beam switch is performed;
one or more first candidate beams based on an earth coordinate system is calculated, and the one or more first candidate beams based on the earth coordinate system are converted to one or more second candidate beams based on an antenna coordinate system through axis transformation,
individual signal intensity or signal-to-noise ratio of the one or more second candidate beams based on the antenna coordinate system is measured, so as to select the at least one target beam among the one or more second candidate beams based on the antenna coordinate system, wherein, the at least one target beam has a maximum signal intensity or a maximum signal-to-noise ratio.

7. The communication method according to claim 1, wherein,
when determining to decide the at least one target beam, a current satellite trajectory information estimate and a confidence of the current satellite trajectory information estimate are generated;
the at least one target beam is decided, and beam switch is performed;
in generating the confidence of the current satellite trajectory information estimate and the current satellite trajectory information estimate, the confidence of the current satellite trajectory information estimate and the current satellite trajectory information estimate are generated according to a plurality of historical satellite trajectory information estimates, a plurality of confidence of the historical satellite trajectory information estimates, a plurality of historical satellite trajectory information and a plurality of confidence of the historical satellite trajectory information, and, the current satellite trajectory information estimate is added to a satellite trajectory information database.

8. A communication device (200), **characterized in that**:
an antenna (210);
a radio frequency module (220) coupled to the antenna to control the antenna; and
a baseband module (230) coupled to the radio frequency module, wherein, the baseband module is configured to:
based on another specific time or another specified time interval, determine whether to decide at least one target beam (110_1~110_7) to receive a satellite payload communication signal from a satellite payload by the at least one target beam; and
in response that determine a current satellite trajectory information is expired, decide to generate a current satellite trajectory information estimate,
wherein, the baseband module emits a control signal to the radio frequency module and the radio frequency module controls the antenna to communicate with the satellite payload.

9. The communication device according to claim 8, wherein, the baseband module is further configured to: when the current satellite trajectory information is expired, generate the current satellite trajectory information estimate and a confidence of the current satellite trajectory information estimate.

10. The communication device according to claim 8, wherein
the baseband module is further configured to, when not to decide the at least one target beam, receive the satellite payload communication signal by the at least one target beam and measure a signal reception quality of the at least one target beam;
update the current satellite trajectory information;
wherein, in determining that the current satellite trajectory information is expired, the baseband module is further configured to:
determine whether a signal-to-noise ratio of the current satellite trajectory information is less than a signal-to-noise ratio threshold; or
determine that the current satellite trajectory information cannot be smoothly interpreted; or
in case that the user terminal smoothly interprets the current satellite trajectory information, a difference between the current satellite trajectory information and a historical satellite trajectory information previously obtained is greater than a threshold.

11. The communication device according to claim 8, wherein, the baseband module is further configured to:
obtain at least one of a two-line element set (TLE) information and a global positioning system (GPS) information,
wherein,
the at least one of the TLE information and the GPS information is obtained from the satellite payload through a downlink signal or a terrestrial network.

12. The communication device according to claim 8, wherein, the baseband module is further configured to:
determine whether there exists a current need to receive the satellite payload communication signal according to a two-line element set (TLE) information or a signal reception intensity; and
determine, within a specified period, to decide the at least one target beam.

13. The communication device according to claim 8, wherein, the baseband module is further configured to:
when determining to decide the at least one target beam, generate a current satellite trajectory information estimate and a confidence of the current satellite trajectory information estimate,
decide the at least one target beam according to the current satellite trajectory information and a global positioning system (GPS) information of the user terminal and perform beam switch;
calculate one or more first candidate beams based on an earth coordinate system, and convert the one or more first candidate beams based on the earth coordinate system to one or more second candidate beams based on an antenna coordinate system through axis transformation,
measure individual signal intensity or signal-to-noise ratio of the one or more second candidate beams based on the antenna coordinate system, so as to select the at least one target beam among the one or more candidate beams based on the antenna coordinate system, wherein, the at least one target beam has a maximum signal intensity or a maximum signal-to-noise ratio.

14. The communication device according to claim 8, wherein, the baseband module is further configured to:
when determining to decide the at least one target beam, a current satellite trajectory information estimate and a confidence of the current satellite trajectory information estimate are generated;
the at least one target beam is decided, and beam switch is performed;
in generating the confidence of the current satellite trajectory information estimate and the current satellite trajectory information estimate, the confidence of the current satellite trajectory information estimate and the current satellite trajectory information estimate are generated according to a plurality of historical satellite trajectory information estimates, a plurality of confidence of the historical satellite trajectory information estimates, a plurality of historical satellite trajectory information and a plurality of confidence of the historical satellite trajectory information and add the current satellite trajectory information estimate to a satellite trajectory information database.
